Europäisches Patentamt

European Patent Office

Office européen des brevets

(19)

(11) **EP 1 398 986 A1**

(12) ## DEMANDE DE BREVET EUROPEEN

(43) Date de publication:
**17.03.2004 Bulletin 2004/12**

(51) Int Cl.7: **H04Q 7/36**

(21) Numéro de dépôt: **03292098.5**

(22) Date de dépôt: **26.08.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **04.09.2002 FR 0210935**

(71) Demandeur: **Nortel Networks Limited
St. Laurent, Quebec H4S 2A9 (CA)**

(72) Inventeurs:
• **Lucidarme, Thierry
78180 Montigny-le-Bretonneux (FR)**
• **Ben Rached, Nidham
75017 Paris (FR)**

(74) Mandataire: **Loisel, Bertrand
Cabinet Plasseraud
65/67 rue de la Victoire
75440 Paris Cedex 09 (FR)**

(54) **Procédé d'allocation de ressources dans un système de radiocommunication à division spatiale et equipements pour la mise en oeuvre du procédé**

(57) Procédé d'allocation de codes' de communication à des canaux établis pour des terminaux mobiles (1-2) en communication dans une cellule d'un système de radiocommunication, dans lequel la cellule est desservie par une station fixe (3) ayant des moyens de réglage de paramètres d'émission-réception définissant un diagramme d'antenne respectif pour chaque terminal mobile dans la cellule, dans lequel les codes de communication alloués font partie d'un ensemble de codes dont certains au moins sont mutuellement orthogonaux. En réponse à une requête d'établissement ou de reconfiguration d'un canal pour un premier terminal mobile dans la cellule, on admet de manière conditionnelle l'allocation audit canal d'un code non orthogonal à au moins un code de l'ensemble déjà alloué à un autre canal établi pour un second terminal mobile dans la cellule, en fonction d'une comparaison entre les paramètres d'émission-réception déterminés pour les premier et second terminaux.

**FIG. 4**

**Description**

La présente invention concerne l'allocation de ressources de communication dans un système radio d'accès multiple à division spatiale. Elle concerne plus particulièrement l'allocation de codes dans un tel système.

Certains systèmes de communication utilisent des codes constitués de séquences binaires connues à la fois d'un émetteur et d'un récepteur et combinées avec un signal numérique à transmettre, pour permettre au seul récepteur auquel la séquence s'adresse, d'extraire ce signal numérique parmi un ensemble de signaux reçus. Cette opération est rendue possible par l'utilisation de codes ayant certaines propriétés de corrélation. C'est le cas par exemple pour les systèmes à accès multiple de type CDMA ("Code Division Multiple Access").

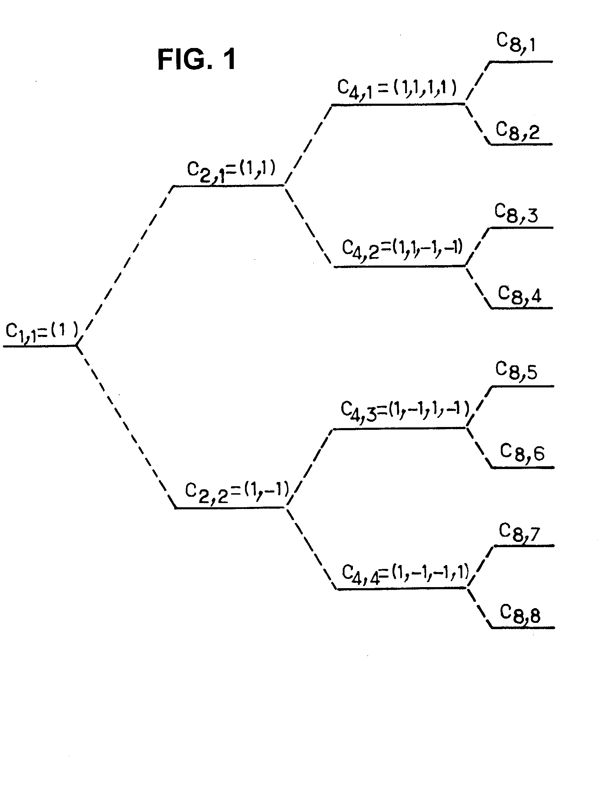

Le procédé s'applique notamment à l'allocation de codes orthogonaux à facteur d'étalement variable (OVSF, "Orthogonal Variable Spreading Factor") utilisés dans certains systèmes CDMA tels que l'UMTS ("Universal Mobile Telecommunication System"). Ces codes OVSF sont choisis dans un ensemble de codes du type de l'arbre représenté sur la figure 1. Chaque code $c_{SF,i}$ ($1 \leq i \leq SF$) est une séquence de SF échantillons appelés "chips", prenant chacun la valeur $\pm 1$, avec $SF=2^{L-k}$, L étant un entier positif (égal à 8 dans le cas de l'UMTS) et k une variable entière telle que $0 \leq k \leq L$. L'arbre est défini par:

$$c_{1,1}=(1),$$

$$c_{2.SF,2i-1} = (c_{SF,i}, c_{SF,i}),$$

$$c_{2.SF,2i} = (c_{SF,i}, -c_{SF,i}).$$

Les chips d'un code de canal $c_{SF,i}$ modulent, à la cadence D = 3,84 Mchip/s dans le cas de l'UMTS, des trains de symboles dont la cadence est de $D/SF = 2^{k-L}.D$, c'est-à-dire que le facteur d'étalement vaut $SF = 2^{L-k}$. Les symboles en question peuvent être des symboles complexes comprenant chacun deux bits signés (de valeur $\pm 1$) correspondant à une voie I et à une voie Q.

Les codes OVSF alloués à différents canaux sont choisis de façon à être globalement orthogonaux pour un même émetteur. Avec l'arbre de codes de la figure 1, deux codes ayant le même facteur d'étalement sont toujours orthogonaux, la somme des produits chip à chip étant nulle. Deux codes de facteurs d'étalement $2^{L-k}$ et $2^{L-k'}$ sont orthogonaux si, après qu'ils ont modulé deux séquences quelconques de bits signés de cadences respectives $2^{k-L}.D$ et $2^{k'-L}.D$, les séquences de chips résultantes sont orthogonales. Avec la disposition en arbre de la figure 1, ceci revient à dire que deux codes de canal sont orthogonaux si et seulement si ils n'appartiennent pas à une même branche de l'arbre, allant de la racine $c_{1,1}$ à une feuille $c_{L,i}$. La sélection des codes obéit à cette contrainte de façon globale : l'ensemble des codes de canal utilisés au même instant par l'émetteur est tel qu'on ne trouve pas deux codes sur la même branche. Ceci permet aux récepteurs de discriminer les canaux qui les concernent.

Dans un système utilisant de tels codes, il est judicieux d'allouer les codes de telle façon que deux communications proches, et donc susceptibles d'interférer l'une avec l'autre, utilisent des codes orthogonaux, de façon à améliorer la qualité de ces communications.

Des systèmes de radiocommunication d'accès multiple à division spatiale SDMA ("Space Division Multiple Access") sont par ailleurs connus. De tels systèmes comprennent des stations de base dont l'antenne, parfois qualifiée d'antenne intelligente ou "smart antenna", comporte une pluralité d'éléments rayonnants commandés conjointement pour émettre en direction ou recevoir depuis un terminal. Les éléments rayonnants peuvent émettre ou recevoir simultanément avec une pondération du signal par un coefficient complexe dont l'argument dépend d'une direction angulaire relative au terminal avec lequel l'antenne échange des signaux.

EP-A-1 026 911 décrit, pour un relais radio ayant des capacités d'émission-réception multiples dans différents secteurs géographiques prédéterminés, la répartition des codes disponibles en plusieurs sous-ensembles, certains étant planifiés pour être utilisés par des terminaux fixes situés dans des secteurs de garde, positionnés entre des secteurs de base, et les autres étant planifiés pour être utilisés par des terminaux fixes situés dans les secteurs de base.

La répartition des codes divulguée dans ce document est bien adaptée à un réseau où les terminaux de communication sont fixes et où les sous-ensembles de codes peuvent être alloués une fois pour toutes ou sur de longues périodes de temps, par zone géographique. En revanche, un problème se pose dans un système de radiocommunication où les terminaux sont mobiles. La transposition de cette méthode de planification aux radiocommunications avec les mobiles est problématique car il devient nécessaire de prendre en compte la mobilité des terminaux, et notamment le cas où ils changent de secteur, pour savoir dans quel sous-ensemble il convient de leur choisir des codes de communication. En fait, dans un contexte radio mobile, chacun des secteurs prédéterminés correspondrait à une cellule distincte requérant ses propres ressources de signalisation, impliquant une plus grande sollicitation des équipements pour les procédures de sélection/resélection de cellule, de handover, etc. Divers systèmes radio mobiles, tels l'UMTS, disposent d'autres moyens pour distinguer différentes cellules, et la méthode de EP-A-1 026 911, destinée à des terminaux fixes, ne leur apporterait rien sinon une plus grande complexité et une moindre disponibilité des codes OVSF.

Un but de la présente invention est de proposer une allocation dynamique des ressources dans un système de radiocommunication à division spatiale comprenant des terminaux mobiles.

Un autre but de l'invention est de permettre une allocation de codes tenant compte des codes déjà alloués et de l'interférence effective mesurée.

Un autre but encore de l'invention est de permettre une allocation de codes prenant en compte le sens et/ou la vitesse de déplacement des terminaux mobiles.

L'invention propose ainsi un procédé d'allocation de codes de communication à des canaux établis pour des terminaux mobiles en communication dans une cellule d'un système de radiocommunication, dans lequel la cellule est desservie par une station fixe ayant des moyens de réglage de paramètres d'émission-réception définissant un diagramme d'antenne respectif pour chaque terminal mobile dans la cellule, dans lequel les codes de communication alloués font partie d'un ensemble de codes dont certains au moins sont mutuellement orthogonaux. En réponse à une requête d'établissement ou de reconfiguration d'un canal pour un premier terminal mobile dans la cellule, on admet de manière conditionnelle l'allocation audit canal d'un code non orthogonal à au moins un code de l'ensemble déjà alloué à un autre canal établi pour un second terminal mobile dans la cellule, en fonction d'une comparaison entre les paramètres d'émission-réception déterminés pour les premier et second terminaux.

Le procédé n'impose aucun partitionnement des codes disponibles en fonction d'une sectorisation prédéfinie de la cellule. Tous les codes de l'ensemble sont a priori disponibles partout dans la cellule, et on s'autorise d'en réutiliser certains en fonction de l'écart d'azimut observé de façon dynamique entre les directions apparentes des terminaux depuis la station fixe. Le procédé conduit donc à une augmentation de capacité en termes de codes, et non à une contrainte dans le processus de sélection de ces codes.

Les paramètres d'émission-réception définissent typiquement une direction principale d'émission-réception pour un terminal. Ladite comparaison peut alors consister à examiner un critère d'écart entre les directions principales d'émission-réception, par exemple en comparant cet écart à un seuil. Elle peut aussi permettre de choisir un code pour lequel l'écart est le plus grand possible.

L'allocation de codes non orthogonaux peut être conditionnée par le fait qu'aucun code orthogonal aux codes déjà alloués n'est plus disponible dans la cellule. Ceci permet de garantir un niveau d'interférence minimum lorsque le trafic est faible dans la cellule, tandis que les ressources en codes peuvent être réutilisées suivant un bon compromis lorsqu'elles commencent à s'épuiser.

Avantageusement, la station fixe possède une antenne intelligente avec une pluralité d'éléments rayonnants. Les paramètres d'émission-réception déterminés pour un terminal mobile comprennent alors un jeu de coefficients de pondération associés aux éléments d'antenne pour un signal radio échangé entre le terminal mobile et la station fixe.

La puissance d'émission des signaux radio échangés entre les différents terminaux mobiles et la station fixe peut aussi être avantageusement prise en compte dans la comparaison de paramètres. Cela permet d'augmenter le taux d'utilisation de codes non orthogonaux, notamment lorsque la puissance d'émission d'un signal porté par un canal est trop faible pour créer une interférence néfaste sur un autre canal auquel on souhaite allouer un code, même si les codes alloués aux deux canaux ne sont pas orthogonaux. Ainsi, on peut allouer des codes non orthogonaux à des canaux établis pour des terminaux mobiles éventuellement proches, mais avec une puissance d'émission faible des signaux respectifs.

L'allocation de code peut être faite à l'établissement d'un nouveau canal ou bien pour une reconfiguration d'un canal déjà établi. Dans ce dernier cas, on peut par exemple effectuer régulièrement la comparaison de paramètres d'émission-réception pour un ensemble de terminaux mobiles et lorsqu'on détecte qu'un critère, par exemple un critère d'écart, n'est plus rempli, on requiert une reconfiguration du canal établi pour le terminal mobile concerné.

Avantageusement, d'autres critères entrent en compte dans le choix du code à allouer au canal utilisé par un terminal mobile. C'est le cas par exemple d'une vitesse de déplacement du terminal mobile. Cela présente un intérêt dans la mesure où l'on peut autoriser avec confiance l'allocation d'un code non orthogonal à d'autres codes déjà alloués dans la cellule, pour un terminal avec une mobilité faible voire inexistante dès lors que le critère d'écart était préalablement rempli lors de l'établissement ou de la reconfiguration du canal utilisé par ce terminal.

Un autre critère pouvant être combiné à la vitesse de déplacement est le sens de déplacement des terminaux mobiles entrant en jeu dans l'allocation. Ainsi, on peut rendre l'allocation de codes non orthogonaux plus difficile pour des canaux utilisés par des terminaux se rapprochant les uns des autres que pour des canaux utilisés par des terminaux s'éloignant les uns des autres.

L'invention propose en outre une station fixe d'un système de radiocommunication comprenant :

- un système d'antenne pour desservir une cellule ;
- des moyens pour communiquer avec des terminaux mobiles dans ladite cellule par l'intermédiaire du système d'antenne suivant des canaux auxquels des codes de communications sont respectivement alloués ;
- des moyens de réglage de paramètres d'émission-réception définissant un diagramme d'antenne respectif pour chaque terminal mobile dans la cellule ;
- des moyens de transmission à un contrôleur de stations, d'informations relatives aux paramètres d'émission-réception déterminés pour certains au moins des terminaux mobiles ; et
- des moyens de réception, depuis le contrôleur de stations, d'une commande d'allocation à un canal d'un code déterminé par le contrôleur de stations en fonction de certaines au moins desdites informations transmises, relatives aux paramètres d'émission-réception.

Cette station fixe est en particulier adaptée à des systèmes centralisés où un contrôleur de stations met en oeuvre des algorithmes de gestion des ressources, notamment une allocation des codes de communication, sur la base de données et de mesures transmises par le réseau de transmission radio.

L'invention propose également un contrôleur de stations dans un système de radiocommunication comprenant en outre une station fixe comprenant un système d'antenne pour desservir une cellule et apte à communiquer avec des terminaux mobiles dans ladite cellule par l'intermédiaire du système d'antenne suivant des canaux auxquels des codes de communication sont respectivement alloués, ladite station fixe ayant des moyens de réglage de paramètres d'émission-réception définissant un diagramme d'antenne respectif pour chaque terminal mobile dans la cellule. Le contrôleur de stations comprend :

- des moyens pour recevoir, depuis ladite station fixe, des informations relatives auxdits paramètres d'émission-réception déterminé pour certains au moins des terminaux mobiles ;
- des moyens pour recevoir une requête d'établissement et des moyens pour générer une requête de reconfiguration d'un canal pour un premier terminal mobile dans la cellule ;
- des moyens d'allocation de manière conditionnelle, audit canal, en réponse à ladite requête, d'un code non orthogonal à au moins un code de l'ensemble déjà alloué à un autres canal établi pour un second terminal mobile dans la cellule, en fonction d'une comparaison entre les informations reçues, relatives aux paramètres d'émission-réception déterminés pour les premier et second terminaux.

D'autres particularités et avantages de la présente invention apparaîtront dans la description ci-après d'exemples de réalisation non limitatifs, en référence aux dessins annexés, dans lesquels :

- la figure 1, précédemment commentée, représente l'arbre de codes OVSF utilisé dans le système UMTS ;
- la figure 2 est un schéma de principe d'une antenne intelligente ;
- la figure 3 est une représentation schématique de diagrammes d'antennes intelligentes à réseau adaptatif ;
- la figure 4 est un schéma synoptique d'un exemple de système mettant en oeuvre l'invention.

La technique de l'accès multiple à division spatiale utilise des antennes dites intelligentes ("smart antennas"), parfois appelées antennes à formation de faisceaux ("beamforming"), ayant comme particularité de comporter plusieurs éléments rayonnants. Chaque élément rayonnant, qui peut être de tout type (grande antenne, source élémentaire, source à focalisation diélectrique, antenne cross-polar...), a une contribution propre dans une émission ou une réception. Les contributions dépendent généralement de la position angulaire du terminal mobile impliqué dans la transmission par rapport à l'antenne intelligente. Ainsi, il est possible d'émettre ou recevoir un signal au niveau de l'antenne d'une façon qui favorise la direction du terminal mobile.

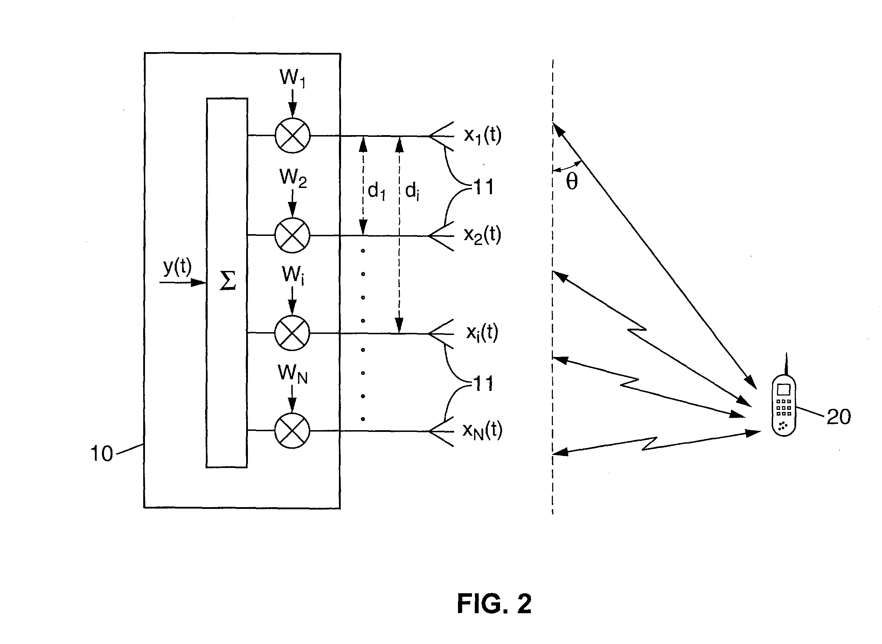

La figure 2 illustre le fonctionnement de telles antennes. L'entité 10 est une station de base faisant partie d'un système de radiocommunication, comme par exemple l'UMTS. Elle communique avec le terminal mobile 20 par l'intermédiaire d'une antenne intelligente qui a été représentée sur la figure comme faisant partie intégrante de la station de base.

Un signal y(t) à transmettre par la station de base 10 au terminal 20 est émis partiellement par chacun des N éléments rayonnants 11 représentés sur la figure 2, (N > 1). Le signal y(t) est répliqué en N signaux $x_i(t)$ pondérés par des coefficients respectifs $w_i$ ($1 \leq i \leq N$) avant d'être appliqués aux éléments rayonnants.

L'art antérieur distingue plusieurs types d'antennes intelligentes dont le principe est cependant proche.

On connaît ainsi des antennes dites à commutation de lobes, qui diffèrent notamment en fonction du nombre de lobes prédéterminés disponibles. On choisit les lobes optimaux que l'on souhaite utiliser parmi les lobes prédéterminés, en fonction de la qualité des signaux reçus au niveau de l'antenne. On fait ensuite éventuellement intervenir d'autres lobes en fonction du déplacement du terminal mobile. Cette commutation peut être réalisée de façon classique par des coupleurs mettant en oeuvre des matrices de Buttler.

Un autre type d'antennes, dites "à réseau adaptatif", permet en outre de maximiser, pour un terminal mobile donné, le rapport signal sur interférences, en créant un diagramme d'antenne dont les "zéros", c'est-à-dire les emplacements à très faible puissance d'émission ou de réception, sont dans la direction des interféreurs du terminal mobile en question.

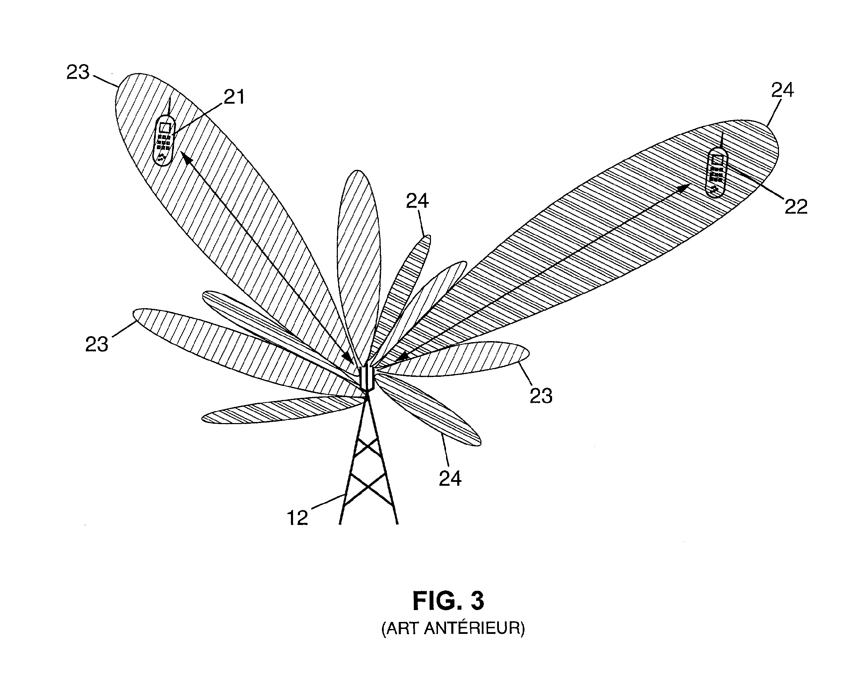

Ce principe est illustré sur la figure 3 où deux terminaux 21 et 22 sont en communication avec la station de base 12. Les lobes 23 et 24 de l'antenne à réseau adaptatif de la station de base 12 sont orientés principalement vers les deux terminaux 21 et 22 respectivement. On perçoit bien sur la figure que le rapport signal sur bruit est minimisé pour chacun des deux terminaux puisque le chevauchement des lobes 23 et 24 est limité.

Les coefficients $w_i$ des différents éléments rayonnants 11 sont des pondérations permettant d'utiliser des lobes d'antenne favorables dans la direction du terminal mobile 20. De façon typique, ce sont des coefficients complexes dont l'argument dépend de la position angulaire $\theta$ du terminal mobile 20 par rapport à l'antenne. Si l'on note $d_i$ la distance, calculée en nombre de $\lambda/2$ ($\lambda$ étant la longueur d'onde radio), qui sépare le $(i+1)$-ième élément rayonnant du premier élément rayonnant, ces deux éléments reçoivent ou émettent avec un déphasage géométrique de $2\pi.d_i.\cos(\theta)/\lambda$. Le système de radiocommunication peut prendre les coefficients $w_i$ de la forme :

$$w_i = \frac{1}{\sqrt{N}} \times e^{-j.\pi.d_i.\cos(\theta)}$$

Toutefois, d'autres expressions des contributions peuvent être utilisées, dans le cas des antennes à réseau adaptatif pour minimiser les contributions d'autres signaux dans d'autres directions que le signal utile.

Les antennes intelligentes telles qu'elles ont été décrites jusque là permettent une émission ainsi qu'une réception plus favorable dans la direction du terminal mobile considéré. En réception, c'est-à-dire dans le sens montant, du terminal mobile 20 vers la station de base 10, les éléments rayonnants sont utilisés comme des capteurs. Des signaux $x_i(t)$ sont captés par ces éléments et sont ensuite pondérés par des coefficients respectifs $w_i$. Les signaux ainsi pondérés sont alors sommés pour retrouver le signal utile $y(t)$.

Par ailleurs, un système envisagé dans la présente invention utilise, pour le codage de ses communications, des codes qui sont avantageusement de type OVSF, comme décrit précédemment en référence à la figure 1. Par exemple, dans le cadre du système UMTS, les codes en question peuvent être les codes de canal décrits aux sections 4.3.1 et 5.2.1 de la spécification technique 3G TS 25.213, version 4.1.0 publiée en juin 2001 par le 3GPP ("3rd Generation Partnership Project"). Le système UMTS prévoit aussi un second codage par des codes de brouillage ("scrambling codes", voir sections 4.3.2 et 5.2.2 de la spécification 3G TS 25.213 précitée). Ces derniers sont souvent utilisés à raison d'un code par station de base dans le sens descendant, c'est-à-dire pour les transmissions de la station de base vers un terminal mobile, ou par terminal mobile dans le sens montant, c'est-à-dire pour les transmissions du terminal mobile vers la station de base. L'invention peut également s'appliquer pour l'utilisation conjointe de ces deux types de codes.

Les codes mentionnés ci-dessus ont des longueurs variables données par le facteur d'étalement SF en nombre de chips. Un canal à SF faible présente un débit élevé, tandis qu'un canal à SF élevé présente un débit faible.

Le nombre de codes étant limité, il est souhaitable de réutiliser les codes disponibles dans la mesure du possible.

L'utilisation de codes est soumise à une allocation pour chaque communication. Dans le système UMTS par exemple, un contrôleur de stations de base, appelé RNC ("Radio Network Controller"), est responsable de l'allocation des codes pour chaque station de base qu'il contrôle. A cet effet, chaque station de base remonte au RNC un rapport de mesures qu'elle effectue régulièrement sur les liens montants. Les terminaux mobiles présents dans la zone de couverture de stations de base sous la responsabilité du RNC, lui remontent, de la même façon, des rapports de mesures sur les liens descendants. La façon dont le RNC alloue les codes peut suivre différentes règles au choix du constructeur de RNC et/ou d'un opérateur exploitant un tel réseau de radiocommunication. Dans d'autres systèmes, il est bien sûr possible que les stations de base elles-mêmes allouent des codes pour les terminaux mobiles qu'elles contrôlent.

Selon l'invention, une station de base ou station fixe communiquant avec des terminaux mobiles doit pouvoir orienter son émission-réception dans une direction principale pour chaque terminal. Bien que d'autres types de station de base puissent être envisagés, on se place par la suite dans le cas d'une station de base ayant une pluralité d'éléments rayonnants. L'allocation des codes pour des canaux de communication entre chaque terminal mobile et la station de base, est alors effectuée en tenant compte des coefficients pondérateurs associés à chacun des éléments rayonnants de l'antenne de la station de base.

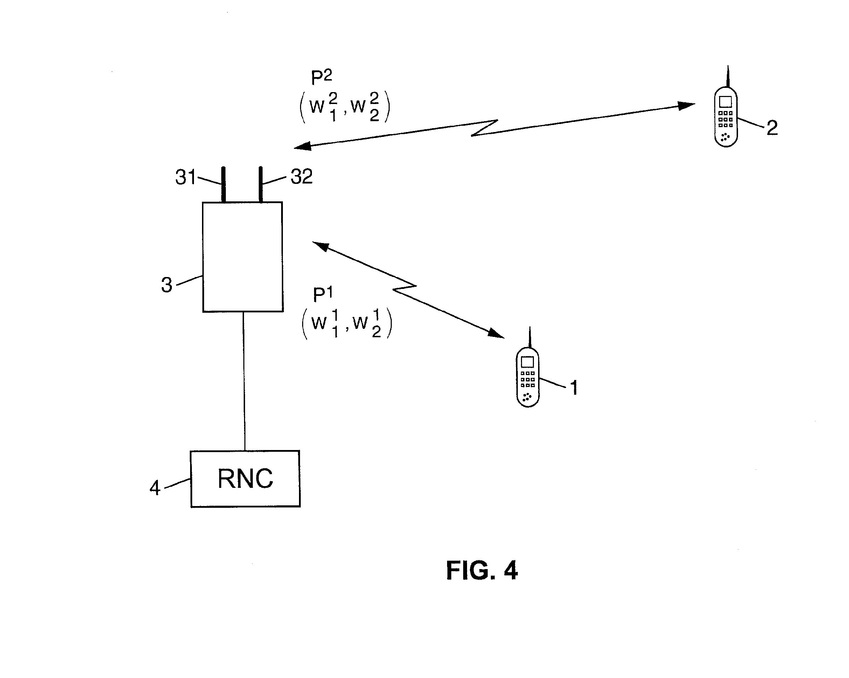

La figure 4 illustre un système simple mettant en oeuvre l'invention. La station de base 3 comprend deux éléments rayonnants 31-32. Elle dessert une cellule dans la couverture de laquelle se trouvent des terminaux mobiles 1-2, avec lesquels la station de base 3 échange des signaux radio. De façon optionnelle, par exemple dans le cadre du système UMTS, un RNC 4 est connecté à la station de base 3 et contrôle le réseau radio ainsi constitué.

On se place désormais, de façon non restrictive, dans le cas de canaux descendants conformément au système de la figure 2, c'est-à-dire pour des transmissions de la station de base 3 vers les terminaux 1-2. Cependant, l'invention décrite ci-après s'applique de la même façon pour des canaux montants.

On considère que la station de base 3, ci-après nommée SB 3, émet des signaux en direction du terminal mobile 2, ci-après nommé TM 2, par l'intermédiaire de ses éléments rayonnants 31-32, au cours d'une communication C2 utilisant un code c2. Cette émission a les caractéristiques suivantes : une puissance d'émission $P^2$ et des contributions $w_1^2$ et $w_2^2$, respectivement pour les éléments rayonnants 31 et 32. Dans les notations utilisées ici, les indices sont ainsi relatifs aux éléments rayonnants de la SB 3 et les exposants sont relatifs aux terminaux mobiles entrant en jeu (TM 1 ou TM 2).

Lorsqu'une communication C1 doit être établie ou est en cours entre la SB 3 et le TM 1, des paramètres caractéristiques de la communication sont disponibles, par exemple dans le sens descendant : une puissance d'émission $P^1$ et des contributions $w_1^1$ et $w_2^1$, respectivement pour les éléments rayonnants 31 et 32. Si la communication est déjà établie, ces paramètres sont connus et sont mis à jour régulièrement, notamment, pour ce qui concerne la puissance d'émission, grâce à une procédure classique de contrôle de puissance. Dans certains systèmes, la puissance d'émission est déterminée par un contrôleur central de stations ou bien elle lui est transmise par les stations de base et les terminaux mobiles lorsque ceux-ci la choisissent par eux-mêmes. Ainsi, le contrôleur de stations est capable de déterminer à tout instant la puissance d'émission des signaux sur chaque canal radio qu'il contrôle.

Lorsque la communication C1 n'est pas encore établie, une puissance d'émission $P^1$ peut être pré-supposée pour le début de la communication, par exemple la puissance maximum autorisée par la SB 3, et les coefficients de pondération des éléments rayonnants sont connus, car ils ont fait l'objet d'une détermination préalable sur des canaux de signalisation utilisés entre la SB 3 et le TM1 avant tout échange sur des canaux de trafic.

Un code c1 doit être alloué au canal descendant, support de la communication C1. Selon l'invention, cette allocation dépend des coefficients de pondération des éléments rayonnants pour certains canaux. Ainsi, dans l'exemple illustré par la figure 2, l'allocation pourra être effectuée sur la base de certains des coefficients : $w_1^2$, $w_2^2$, $w_1^1$ et $w_2^1$. Avantageusement, un critère d'allocation de c1 au canal support de la communication C1 prendra également en compte les puissances d'émission $P^1$ et $P^2$.

Le signal utile reçu par le TM 1, est la somme des contributions de chaque élément rayonnant de la SB 3, c'est-à-dire qu'il est de la forme : $\sqrt{P^1}.f_1.w_1^1 + \sqrt{P^1}.f_2.w_2^1$, où $f_1$ et $f_2$ désignent respectivement l'atténuation, ou fading, survenue lors de la transmission d'un signal de la SB 3 jusqu'au TM 1. De la même façon, le signal parasite, c'est-à-dire l'interférence provenant de la communication C2, sur la communication C1, peut être écrit sous la forme : $\sqrt{P^2}.f_1.w_1^2 + \sqrt{P^2}.f_2.w_2^2$. L'utilisation d'une antenne intelligente pour la SB 3 apporte une optimisation du signal, visant à maximiser son niveau de réception au niveau du TM 1. Ceci est classiquement réalisé en réglant les coefficients de pondération des éléments rayonnants, de façon à ce que $w_1^1$ soit égal à $f_1^*$ et que $w_2^1$ soit égal à $f_2^*$, où $f_1^*$ et $f_2^*$ désignent les nombres conjugués des nombres complexes $f_1$ et $f_2$ respectivement. Ainsi, on peut écrire le signal utile pour le TM 1 de la façon suivante : $\sqrt{P^1}.w_1^{1*}.w_1^1 + \sqrt{P}.w_2^{1*}.w_2^1$. La même optimisation ayant lieu sur le signal utile reçu par le TM 2, on en déduit que le ratio signal / interférence, pour le TM 1 de la figure 2, après optimisation, est de la forme : $R = \sqrt{P^1}.(w_1^{1*}.w_1^1 + w_2^{1*}.w_2^1) / \sqrt{P^2}.(w_1^{1*}.w_1^2 + w_2^{1*}.w_2^2)$.

Selon l'invention, l'allocation d'un code c1 orthogonal à c2 peut donc être soumis à une comparaison du ratio R avec un nombre réel ε. Ainsi, par exemple, si R est supérieur à ε, ce qui signifie que le rapport du signal utile sur l'interférence, vu du TM 1, est au-dessus d'un seuil, l'utilisation du code c1 pour la communication C1 ne souffrira pas de façon excessive d'une interférence créée par la communication C2. Inversement, si le ratio R est inférieur au réel ε, on peut décider d'allouer au canal qui supporte la communication C1, un code c1 orthogonal à c2, de manière à éviter de subir, vu du TM 1, une forte interférence provenant de la communication C2.

Bien sûr, d'autres combinaisons des coefficients de pondération des éléments rayonnants et/ou des puissances d'émission peuvent être envisagées pour décider de l'allocation d'un code c1 à la communication C1, orthogonal ou non au code c2 utilisé par la communication C2. Par exemple, on considère le ratio qui maximise l'interférence provenant de C2 en faisant l'hypothèse que la puissance $P^2$ est maximale, de manière à ce que le ratio R soit minimal. Ainsi, si R est supérieur à ε, à un instant donné, il le sera encore après une augmentation de puissance pour la communication C2. Cela permet d'assurer une certaine pérennité à la qualité de la communication C1, lorsque l'on a alloué au canal portant cette communication un code c1 non orthogonal à c2, même lorsque le TM 2 se déplace vers la SB 3.

Par ailleurs, la valeur du réel ε peut être fixe ou variable. Elle peut par exemple dépendre de l'environnement (urbain, rural...). Elle peut aussi prendre des valeurs différentes selon le facteur d'étalement envisagé pour c1, de sorte qu'on s'assure par exemple d'avoir d'un ratio R plus élevé pour allouer un code de facteur d'étalement plus faible pour la communication C1, ou inversement.

L'exemple de réalisation décrit ci-dessus et illustré par la figure 4 peut être généralisé à un grand nombre de terminaux mobiles en communication avec une station de base et à un nombre élevé d'éléments rayonnants pour cette station de base. Dans ce cas, l'invention prévoit comme précédemment, pour l'allocation d'un code c1 à un canal portant une communication C1 avec un terminal mobile k, avec $1 \leq k \leq M$ et $M \geq 2$, une évaluation sur la base des coefficients des éléments rayonnants pour certaines communications en cours utilisant un code non orthogonal à c1.

Ainsi, dans une configuration où une station de base possède une antenne avec N éléments rayonnants, avec $N \geq 2$, et tient des communications C2 selon des canaux de communications respectifs avec M-1 terminaux mobiles, ces canaux utilisant des codes non orthogonaux à un code c1. Une k-ième communication avec le terminal k peut se voir allouer le code c1, si une comparaison de paramètres d'émission-réception déterminés pour le terminal k d'une part et les M-1 autres terminaux d'autre part est vérifié. Dans un mode de réalisation avantageux qui est une extension du cas décrit précédemment, cette comparaison dépend des contributions $w_i^j$, et éventuellement des puissances d'émission $P^j$, où $1 \leq i \leq N$, $1 \leq j \leq M$ et $j \neq k$. Elle peut ainsi être basée sur le ratio

$$\frac{\sum_{i \in \{1...N\}} \sqrt{P^k} \times (w_i^{k}{}^* \cdot w_i^k)}{\sum_{j \in \{1...M\}, j \neq k} \sqrt{P^j} \times (\sum_{i \in \{1...N\}} w_i^{k}{}^* \cdot w_i^j)} .$$

Ainsi, le code c1 non orthogonal aux codes c2 déjà alloués pour les canaux supportant les communications C2 peut être alloué au canal de communication avec le terminal mobile k si le ratio ci-dessus a une valeur supérieur à un seuil ε choisi.

Avantageusement, l'allocation d'un code pour la communication du TM k, peut être effectuée en évaluant un tel ratio sur plusieurs ensembles de communications utilisant des codes non orthogonaux à un code ck. Le code ck finalement choisi pour la communication avec le TM k peut alors être celui, pour lequel le ratio ainsi calculé est maximal. Autrement dit, on alloue, pour un canal donné, le code remplissant les critères suivants, les critères étant évalués pour plusieurs ensembles de communications avec des TM ayant des codes non orthogonaux au code qu'on envisage d'allouer :

$$\frac{\sum_{i \in \{1...N\}} \sqrt{P^k} \times (w_i^{k}{}^* \cdot w_i^k)}{\sum_{j \in \{1...M\}, j \neq k} \sqrt{P^j} \times (\sum_{i \in \{1...N\}} w_i^{k}{}^* \cdot w_i^j)} \geq \varepsilon$$

et

$$\frac{\sum_{i \in \{1...N\}} \sqrt{P^k} \times (w_i^{k}{}^* \cdot w_i^k)}{\sum_{j \in \{1...M\}, j \neq k} \sqrt{P^j} \times (\sum_{i \in \{1...N\}} w_i^{k}{}^* \cdot w_i^j)}$$

est maximum.

De façon typique, le dénominateur du ratio est calculé pour quelques TM parmi l'ensemble des TM ayant des communications avec la station de base utilisant des codes non orthogonaux à un code qu'on envisage d'allouer.

Selon un mode de réalisation de l'invention, l'allocation d'un code non orthogonal à des codes déjà alloués pour des canaux de communication entre des terminaux mobiles et une station de base, est soumise à un critère tels que ceux décrits ci-dessus, à condition qu'aucun code orthogonal à tous les autres codes déjà alloués pour des communications avec la station de base ne soit plus disponible dans l'ensemble des canaux prévus par le système utilisé. Ainsi, on privilégie l'allocation d'un code orthogonal à tous les autres codes déjà alloués, tant que les ressources en codes utilisables dans le cadre des communications avec la station de base, ne sont pas épuisées. Ceci permet de limiter les interférences, notamment lorsque le nombre de communications avec la station de base n'est pas trop élevé.

L'allocation d'un code pour un canal de communication, selon l'invention, peut être faite à l'établissement de ce canal. Dans ce cas, elle fait suite à une requête d'établissement de canal, qui peut par exemple' être transmise d'un terminal mobile, souhaitant initier une communication à un contrôleur de stations par l'intermédiaire d'une station de base.

L'allocation peut aussi se faire au cours d'une communication. Dans ce dernier cas, l'allocation est en fait une ré-allocation. Elle fait l'objet d'un requête de reconfiguration du canal utilisé pour la communication. Cette requête peut par exemple être générée par le contrôleur de stations, notamment s'il évalue qu'un critère d'écart précédemment rempli pour un terminal mobile, ne l'est plus. Une telle ré-allocation d'un nouveau code pour le canal de communication peut être faite selon les principes exposés plus haut, de la même façon qu'une première allocation. Dans un mode de réalisation particulier, l'évaluation du critère d'écart peut être effectuée à certains instants pré-déterminés, par exemple périodiquement, en vue d'une éventuelle reconfiguration de canal. Si l'on utilise le mode périodique, la période peut être variable, par exemple en fonction d'un nombre de codes non orthogonaux déjà alloués.

Comme cela a été précisé plus haut, l'ensemble des principes décrits ici sont applicables de la même façon pour des canaux descendants, c'est-à-dire des canaux portant des informations émises par une station fixe à destination d'un terminal mobile, et pour des canaux montants, c'est-à-dire des canaux portant des informations émises par un terminal mobile à destination d'une station fixe.

Dans un mode de réalisation où l'allocation est centralisée au niveau d'un contrôleur de stations, comme dans le système UMTS où le RNC 4 prend la décision des codes à allouer, c'est ce contrôleur qui effectue l'évaluation du critère d'écart ci-dessus sur la base des rapports d'informations transmis par la station de base et contenant notamment les coefficients de pondération associés aux éléments rayonnants d'une station fixe pour des signaux radio échangés entre la station fixe et certains terminaux mobiles.

De façon avantageuse, l'allocation des codes prend en compte, en outre, une estimation de la vitesse de déplacement de terminaux mobiles. Cette estimation de vitesse peut être de tout type. Les vitesses estimées sont ensuite prises en compte dans les critères d'allocation d'un code. Ainsi l'allocation de code pour un canal de communication entre un terminal mobile et une station fixe peut être telle que le code alloué à ladite communication soit de préférence orthogonal aux codes déjà alloués pour d'autres canaux de communication si le terminal mobile considéré a une vitesse estimée supérieure à un seuil. inversement, on pourra admettre pour un canal de communication avec un terminal mobile ayant une faible vitesse estimée en comparaison d'un seuil, l'allocation d'un code non orthogonal à d'autres codes déjà utilisés pour des canaux de communication avec la station de base, à condition toutefois de remplir un critère d'écart tel quel décrit plus haut.

Dans un autre mode de réalisation avantageux, l'estimation de vitesse est prise en compte dans l'allocation de codes, effectuée par exemple sous la responsabilité d'un contrôleur de stations, en durcissant ou au contraire en assouplissant le critère à respecter par une comparaison entre les coefficients pondérateurs de l'antenne pour des signaux radio échangés avec un premier et des seconds terminaux mobiles, comme décrit plus haut. Par exemple, la valeur du réel $\varepsilon$ auquel on compare un ratio représentatif d'un rapport signal / interférences, peut être augmentée lorsque la vitesse estimée du premier terminal mobile considéré est élevée et diminuée lorsque la vitesse estimée du premier terminal mobile considéré est faible en comparaison d'un seuil de vitesse.

De façon avantageuse, la vitesse estimée peut être une vitesse angulaire. En effet, un terminal mobile se déplaçant perpendiculairement à un rayon de la cellule desservie par une station fixe est facilement susceptible de se trouver, à l'issue de ce déplacement, dans une zone où des codes non orthogonaux à celui alloué à un canal sur lequel il communique, sont utilisés. Ainsi, une vitesse angulaire élevée peut conduire à la nécessité de ré-allocations rapides et répétées de codes. Cela peut alors être évité grâce à la prise en compte de la vitesse angulaire dans l'allocation des codes, comme décrit ci-dessus.

De façon avantageuse, la vitesse angulaire d'un terminal mobile peut être estimée sur la base des coefficients de pondération associés aux éléments d'antenne de la station fixe considérée pour des signaux radio échangés entre la station fixe et le terminal mobile. A cet effet, certains des coefficients de pondération sont mémorisés, par exemple au niveau de la station de base ou bien d'un contrôleur de stations après que la station fixe lui a transmis ces coefficients. L'estimation de la vitesse du terminal mobile consiste alors à calculer une variation dans le temps des coefficients de pondération.

En reprenant les notations de la figure 4, cela signifie que l'estimation de la vitesse du TM 1 peut être faite en mémorisant les valeurs des coefficients $w^1_1$ et/ou $w^1_2$. Soient par exemple $w^1_1(t)$ la valeur de $w^1_1$ à l'instant t et $w^1_1(t+1)$ la valeur de $w^1_1$ à l'instant t+1. L'estimation de la vitesse du TM 1 peut alors être déduite d'un taux de variation de $w^1_1$ entre les instants t et t+1, c'est-à-dire $w^1_1(t+1)-w^1_1(t)$. Cette évaluation est rendue possible par le fait que les coefficients associés aux éléments rayonnants sont classiquement choisis par la station de base pour émettre ou recevoir principalement dans la direction du terminal mobile considéré.

Bien sûr, d'autres estimateurs de vitesse peuvent être utilisés sur la base des coefficients de pondération. Par exemple, dans le cas précédent, le calcul d'un second estimateur $w^1_2(t+1)-w^1_2(t)$ peut permettre d'affiner l'estimation de la vitesse pour le TM 1, en combinaison avec l'estimation précédente. Ainsi, l'estimation de la vitesse du TM 1 peut être une moyenne de la forme : ½ x $(w_1^1(t+1)-w_1^1(t)+w_2^1(t+1)-w_2^1(t))$. D'autres estimations encore peuvent se baser sur un taux de variation des contributions sur une période de temps plus longue, par exemple entre des instants d'évaluation non consécutifs. En outre, cette estimation peut être bien sûr généralisée au cas où la station de base impliquée dans la communication a plus de deux éléments rayonnants.

Selon un mode de réalisation avantageux de l'invention, l'allocation de codes prend en compte en outre un sens de déplacement estimé pour certains terminaux mobiles. Tout type d'estimateur connu du sens de déplacement d'un terminal mobile peut être envisagé à cet effet. L'estimation peut être notamment réalisée par un contrôleur de stations sur la base d'informations transmises par la station fixe en communication avec le terminal. Ainsi, on peut avantageusement allouer de préférence à un canal de communication entre un premier terminal mobile et une station fixe, un code orthogonal à des codes déjà utilisés pour des canaux de communication entre d'autres terminaux mobiles et ladite station fixe, lorsque l'estimation du sens de déplacement révèle que le premier terminal mobile se rapproche d'au moins un des autres terminaux mobiles ou bien qu'au moins un de ces autres terminaux se rapproche du premier terminal mobile. inversement, si l'estimation des sens de déplacement révèle qu'il n'existe aucun rapprochement entre le premier terminal et les autres terminaux, voire qu'il existe un éloignement entre eux, on peut de préférence allouer au canal utilisé par le premier terminal mobile, un code non orthogonal aux codes utilisés par les canaux utilisés par les autres terminaux mobiles. Cette précaution permet de limiter les interférences qui résulteraient d'un déplacement des terminaux mobiles les uns vers les autres et donc de l'utilisation proche de codes non orthogonaux. Dans le même temps, cela permet une optimisation de la gestion des ressources par l'autorisation d'une utilisation de codes non orthogonaux lorsque les risques d'augmentation des interférences sont faibles au vu de l'éloignement des terminaux mobiles concernés.

La prise en compte du sens de déplacement dans l'allocation des codes peut se baser sur une comparaison entre les paramètres d'émission-réception déterminés pour différents terminaux, dont la valeur peut par exemple être comparée à un seuil plus ou moins élevé selon le sens de déplacement des terminaux mobiles considérés. Par exemple, dans la configuration illustrée par la figure 4, le canal utilisé pour la communication C1 du TM 1 avec la SB 3 peut se voir allouer un code c1 non orthogonal à un code c2 utilisé pour un canal utilisé pour la communication C2 du TM 2 avec la SB 3, si un critère d'écart basé sur les coefficients associés aux éléments rayonnants 31-32 est rempli et si l'estimation du sens de déplacement du TM 1 et/ou du TM 2 révèle que ces terminaux ne se rapprochent pas l'un de l'autre. inversement, le code c1 alloué à un canal pour la communication C1 sera de préférence orthogonal au code c2, si l'estimation du sens de déplacement du TM 1 et/ou du TM 2 révèle que ces terminaux se rapprochent l'un de l'autre.

Dans un autre mode de réalisation, la détection d'un rapprochement des TM 1 et 2, grâce à l'estimation des sens de déplacement de ces terminaux mobiles, peut durcir le critère d'écart pour l'allocation d'un code c1 non orthogonal à c2, par exemple en affectant au réel $\varepsilon$ décrit précédemment une valeur très élevée. En revanche, la valeur du réel $\varepsilon$ peut être réduite lors de l'évaluation du critère d'écart pour l'allocation d'un code c1 non orthogonal à c2, lorsque l'estimation du sens de déplacement des TM 1 et 2 révèle qu'au moins un de ces terminaux mobiles s'éloigne de l'autre. ,

De façon avantageuse, la prise en compte de l'estimation de la vitesse et de l'estimation du sens de déplacement des terminaux mobiles, dans l'allocation des ressources de codes, sera fait de façon conjointe. Ainsi, on peut favoriser l'allocation de codes orthogonaux en premier lieu pour des canaux utilisés par des terminaux mobiles se rapprochant à vive allure, tandis qu'une allocation de codes non orthogonaux sera privilégiée pour des canaux utilisés par des terminaux ne s'interférant pas l'un l'autre de façon trop pénalisante au vu d'un critère basé sur des coefficients de pondération associés à des éléments d'antenne d'une station fixe, tel que décrit précédemment, et qui ne se rapprochent pas l'un de l'autre avec une vitesse élevée.

Bien sûr, la présente invention ne se limite pas au cas de systèmes de radiocommunication du type UMTS. En outre, les codes qu'elle fait intervenir peuvent être d'une autre nature que les codes de canal ou de brouillage utilisés en particulier dans le système UMTS. Par exemple, certains systèmes de radiocommunication à accès multiple à division fréquentielle utilisent un saut de fréquences, c'est-à-dire qu'un canal de communication entre un terminal mobile et une station fixe d'un tel système possède une fréquence porteuse variant, avec une période très courte, selon une séquence prédéterminée. Dans un tel cas, les codes de la présente invention désignent ces séquences de fréquences successives, dont certaines sont mutuellement orthogonales. L'allocation des séquences selon l'invention permet alors de limiter l'interférence entre les canaux tout en autorisant des utilisations de séquences non orthogonales pour des canaux de communication établis pour des terminaux mobiles distincts, lorsqu'est rempli un critère basé sur une comparaison de paramètres d'émission-réception déterminés respectivement pour ces terminaux.

**Revendications**

**1.** Procédé d'allocation de codes de communication à des canaux établis pour des terminaux mobiles (1-2) en communication dans une cellule d'un système de radiocommunication, dans lequel la cellule est desservie par une station fixe (3) ayant des moyens de réglage de paramètres d'émission-réception définissant un diagramme d'antenne respectif pour chaque terminal mobile dans la cellule, dans lequel les codes de communication alloués font partie d'un ensemble de codes dont certains au moins sont mutuellement orthogonaux, **caractérisé en ce qu'**en réponse à une requête d'établissement ou de reconfiguration d'un canal pour un premier terminal mobile dans la cellule, on admet de manière conditionnelle l'allocation audit canal d'un code non orthogonal à au moins un code de l'ensemble déjà alloué à un autre canal établi pour un second terminal mobile dans la cellule, en fonction d'une comparaison entre les paramètres d'émission-réception déterminés pour les premier et second terminaux.

2. Procédé selon la revendication 1, dans lequel on admet l'allocation d'un code non orthogonal à au moins un code de l'ensemble déjà alloué, quand ladite requête d'établissement ou de reconfiguration survient alors que l'ensemble n'offre plus de code adapté au canal à établir ou à reconfigurer et orthogonal à tous les codes de communication déjà alloués.

3. Procédé selon la revendication 1 ou 2, dans lequel lesdits paramètres d'émission-réception définissent, pour chaque terminal mobile dans la cellule, une direction principale d'émission-réception et dans lequel ladite comparaison entre les paramètres d'émission-réception déterminés pour les premier et second terminaux comprennent un critère d'écart entre les directions principales définies pour les premier et second terminaux.

4. Procédé selon l'une quelconque des revendications 1 à 3, dans lequel ladite allocation audit canal d'un code non orthogonal à au moins un code de l'ensemble déjà alloué à un autre canal établi pour un second terminal mobile dans la cellule est admise lorsque ladite comparaison entre les paramètres d'émission-réception déterminés pour les premier et second terminaux présente un écart supérieur à un seuil.

5. Procédé selon l'une quelconque des revendications 1 à 4, dans lequel on sélectionne comme code de communication à allouer au canal à établir ou à reconfigurer pour ledit premier terminal un code non orthogonal à au moins un code déjà alloué à un autre canal établi pour un second terminal tel que ladite comparaison entre les paramètres d'émission-réception déterminés pour les premier et second terminaux présente un écart maximal.

6. Procédé selon l'une quelconque des revendications précédentes, dans lequel une antenne de la station fixe comprend plusieurs éléments rayonnants (31-32), associés chacun à un coefficient pondérateur respectif, et dans lequel les paramètres d'émission-réception déterminés pour un terminal mobile dans la cellule comprennent un jeu de coefficients pondérateurs complexes associés aux éléments d'antenne pour un signal radio échangé entre ledit terminal et la station fixe.

7. Procédé selon la revendication 6, dans lequel ladite comparaison entre les paramètres d'émission-réception déterminés pour les premier et second terminaux dépend en outre d'une puissance d'émission respective des signaux radio échangés entre lesdits premier et second terminaux et la station fixe.

8. Procédé selon la revendication 7, dans lequel un entier k désigne ledit premier terminal et un entier M supérieur ou égal à 2 est tel qu'il existe M-1 seconds terminaux, dans lequel les coefficients pondérateurs complexes $w_i^j$, avec $1 \leq i \leq N$, $N \geq 2$, j entier différent de k, sont associés aux éléments rayonnants i d'une antenne de la station fixe pour un signal radio échangé avec un terminal mobile j parmi les M-1 seconds terminaux mobiles, dans lequel les coefficients pondérateurs complexes $w_i^k$ sont associés auxdits éléments rayonnants i pour un signal radio échangé avec le terminal mobile k, dans lequel $P^j$ et $P^k$ sont les puissances d'émission pour les signaux radio échangés entre la station fixe et le terminal mobile j et le terminal mobile k respectivement, et dans lequel ladite comparaison entre les paramètres d'émission-réception déterminés pour lesdits premier et seconds terminaux correspond au ratio

$$\frac{\sum_{i \in \{1...N\}} \sqrt{P^k} \times (w_i^{k*} \cdot w_i^k)}{\sum_{j \in \{1...M\}, j \neq k} \sqrt{P^j} \times (\sum_{i \in \{1...N\}} w_i^{k*} \cdot w_i^j)}.$$

**9.** Procédé selon l'une quelconque des revendications précédentes, dans lequel ladite comparaison entre les paramètres d'émission-réception déterminés pour lesdits premier et second terminaux est évaluée périodiquement pour requérir une reconfiguration du canal pour ledit premier terminal.

**10.** Procédé selon l'une quelconque des revendications précédentes, dans lequel lesdits canaux sont descendants.

**11.** Procédé selon l'une quelconque des revendications 1 à 9, dans lequel lesdits canaux sont montants.

**12.** Procédé selon l'une quelconque des revendications précédentes, comprenant en outre une estimation de vitesse du premier terminal mobile au moins et dans lequel l'allocation de code au canal à établir ou à reconfigurer pour ledit premier terminal dépend en outre de la vitesse estimée.

**13.** Procédé selon la revendication 12, dans lequel l'estimation de vitesse comprend une estimation de vitesse angulaire dudit terminal mobile comprenant une mémorisation de certains au moins desdits paramètres d'émission-réception déterminés pour ledit terminal mobile et une estimation d'une variation desdits paramètres d'émission-réception sur une période de temps.

**14.** Procédé selon la revendication 12 ou 13, dans lequel l'allocation audit canal à établir ou à reconfigurer pour le premier terminal mobile d'un code non orthogonal à au moins un code de l'ensemble déjà alloué à un autre canal établi pour un second terminal mobile dans la cellule est effectuée en outre si la vitesse estimée du premier terminal mobile est inférieure à un seuil de vitesse.

**15.** Procédé selon l'une quelconque des revendications précédentes, comprenant en outre une estimation d'un sens de déplacement desdits premier et second terminaux mobiles et dans lequel l'allocation de code au canal à établir ou à reconfigurer pour le premier terminal mobile dépend en outre desdites estimations des sens de déplacement.

**16.** Procédé selon la revendication 15, dans lequel l'allocation audit canal d'un code non orthogonal à au moins un code de l'ensemble déjà alloué à un autre canal établi pour un second terminal mobile dans la cellule en fonction de ladite comparaison des paramètres d'émission-réception est soumise à une condition plus sévère si lesdites estimations des sens de déplacement montrent un rapprochement entre le premier terminal et au moins un desdits seconds terminaux.

**17.** Procédé selon l'une quelconque des revendications précédentes, dans lequel lesdits paramètres d'émission-réception déterminés pour certains au moins des terminaux mobiles sont transmis par la station fixe à un contrôleur de stations et dans lequel l'allocation de code est effectuée par ledit contrôleur de stations.

**18.** Station fixe (3) d'un système de radiocommunication comprenant :

- un système d'antenne pour desservir une cellule ;
- des moyens pour communiquer avec des terminaux mobiles (1-2) dans ladite cellule par l'intermédiaire du système d'antenne suivant des canaux auxquels des codes de communications sont respectivement alloués ;
- des moyens de réglage de paramètres d'émission-réception définissant un diagramme d'antenne respectif pour chaque terminal mobile dans la cellule ;
- des moyens de transmission à un contrôleur de stations (4), d'informations relatives aux paramètres d'émission-réception déterminés pour certains au moins des terminaux mobiles ; et
- des moyens de réception, depuis le contrôleur de stations (4), d'une commande d'allocation à un canal d'un code déterminé par le contrôleur de stations en fonction de certaines au moins desdites informations transmises, relatives aux paramètres d'émission-réception.

**19.** Station fixe (3) selon la revendication 18, dans laquelle ledit système d'antenne comprend plusieurs éléments rayonnants (31-32), associés chacun à un coefficient pondérateur respectif et dans laquelle lesdites informations relatives aux paramètres d'émission-réception déterminés pour un terminal mobile comprennent un jeu de coefficients pondérateurs complexes associés aux éléments d'antenne pour un signal radio échangé entre ledit terminal et la station fixe.

**20.** Contrôleur de stations (4) dans un système de radiocommunication comprenant en outre une station fixe (3) comprenant un système d'antenne pour desservir une cellule et apte à communiquer avec des terminaux mobiles (1-2) dans ladite cellule par l'intermédiaire du système d'antenne suivant des canaux auxquels des codes de communication sont respectivement alloués, ladite station fixe ayant des moyens de réglage de paramètres d'émission-réception définissant un diagramme d'antenne respectif pour chaque terminal mobile dans la cellule, le contrôleur de stations comprenant :

- des moyens pour recevoir, depuis ladite station fixe, des informations relatives auxdits paramètres d'émission-réception déterminés pour certains au moins des terminaux mobiles ;
- des moyens pour recevoir une requête d'établissement et des moyens pour générer une requête de reconfiguration d'un canal pour un premier terminal mobile dans la cellule ;
- des moyens d'allocation de manière conditionnelle, audit canal, en réponse à ladite requête, d'un code non orthogonal à au moins un code de l'ensemble déjà alloué à un autre canal établi pour un second terminal mobile dans la cellule, en fonction d'une comparaison entre les informations reçues, relatives aux paramètres d'émission-réception déterminés pour les premier et second terminaux.

21. Contrôleur de stations selon la revendication 20, dans lequel les moyens d'allocation commandent l'allocation d'un code non orthogonal à au moins un code déjà alloué de l'ensemble en réponse à une requête d'établissement ou de reconfiguration survenant alors que l'ensemble n'offre plus de code adapté au canal à établir ou à reconfigurer et orthogonal à tous les codes de communication déjà alloués.

22. Contrôleur de stations selon la revendication 20 ou 21, dans lequel lesdits paramètres d'émission-réception définissent, pour chaque terminal mobile dans la cellule, une direction principale d'émission-réception et dans lequel ladite comparaison entre les informations relatives aux paramètres d'émission-réception déterminés pour les premier et second terminaux comprennent un critère d'écart entre les directions principales définies pour les premier et second terminaux.

23. Contrôleur de stations selon l'une quelconque des revendications 20 à 22, dans lequel le système d'antenne de la station de base comprend plusieurs éléments rayonnants (31-32), associés chacun à un coefficient pondérateur respectif, et dans lequel lesdites informations reçues, relatives aux paramètres d'émission-réception déterminés pour chaque terminal mobile dans la cellule, comprennent un jeu de coefficients pondérateurs complexes associés aux éléments d'antenne (31-32) pour un signal radio échangé entre ledit terminal et la station fixe.

24. Contrôleur de stations selon la revendication 23, comprenant en outre des moyens de détermination d'une puissance d'émission d'un signal radio échangé entre chaque terminal mobile et ladite station fixe, dans lequel ladite comparaison entre les informations relatives aux paramètres d'émission-réception déterminés pour les premier et second terminaux dépend en outre de la puissance d'émission respective des signaux radio échangés entre lesdits premier et second terminaux et la station fixe.

25. Contrôleur de stations selon la revendication 24, dans lequel un entier k désigne ledit premier terminal et un entier M supérieur ou égal à 2 est tel qu'il existe M-1 seconds terminaux, dans lequel les coefficients pondérateurs complexes $w_i^j$, avec $1 \leq i \leq N$, $N \geq 2$, j entier différent de k, sont associés aux éléments rayonnants i de l'antenne de la station fixe pour un signal radio échangé avec un terminal mobile j parmi les M-1 seconds terminaux mobiles, dans lequel les coefficients pondérateurs complexes $w_i^k$ sont associés auxdits éléments rayonnants i pour un signal radio échangé avec le terminal mobile k, dans lequel $P^j$ et $P^k$ sont les puissances d'émission pour les signaux radio échangés entre la station fixe et le terminal mobile j et le terminal mobile k' respectivement, et dans lequel ladite comparaison entre les informations relatives aux paramètres d'émission-réception déterminés pour les premier et seconds terminaux correspond au ratio

$$\frac{\displaystyle\sum_{i \in \{1...N\}} \sqrt{P^k} \times (w_i^k * \cdot w_i^k)}{\displaystyle\sum_{j \in \{1...M\}, j \neq k} \sqrt{P^j \times \left(\sum_{i \in \{1...N\}} w_i^k * \cdot w_i^j\right)}} .$$

26. Contrôleur de stations selon l'une quelconque des revendications 20 à 25, comprenant des moyens pour évaluer périodiquement ladite comparaison entre les informations relatives aux paramètres d'émission-réception déterminés pour les premier et second terminaux, afin de générer une requête de reconfiguration du canal pour ledit premier terminal.

**27.** Contrôleur de stations selon l'une quelconque des revendications 20 à 26, comprenant en outre des moyens d'estimation de vitesse du premier terminal mobile au moins, dans lequel lesdits moyens d'allocation de code au canal à établir ou à reconfigurer pour ledit premier terminal prennent en compte la vitesse estimée.

**28.** Contrôleur de stations selon la revendication 27, dans lequel les moyens d'estimation de vitesse comprennent des moyens d'estimation d'une vitesse angulaire dudit terminal mobile comprenant des moyens de mémorisation de certaines au moins desdites informations reçues, relatives aux paramètres d'émission-réception déterminés ledit terminal et la station fixe, et des moyens d'estimation d'une variation desdits informations reçues sur une période de temps.

**29.** Contrôleur de stations selon l'une quelconque des revendications 20 à 28, comprenant en outre des moyens d'estimation d'un sens de déplacement desdits premier et second terminaux mobiles, dans lequel les moyens d'allocation de code au canal à établir ou à reconfigurer pour le premier terminal prennent en compte lesdites estimations des sens de déplacement.

**30.** Contrôleur de stations selon la revendication 29, comprenant des moyens pour soumettre ladite comparaison entre les informations relatives aux paramètres d'émission-réception déterminés pour les premier et second terminaux, à un critère plus sévère si lesdites estimations des sens de déplacement montrent un rapprochement entre le premier terminal et au moins un desdits seconds terminaux.

**31.** Contrôleur de stations selon l'une quelconque des revendications 20 à 30, dans lequel lesdits moyens d'allocation de code admettent l'allocation, audit canal, d'un code non orthogonal à au moins un code de l'ensemble déjà alloué à un autre canal établi pour un second terminal mobile dans la cellule, lorsque ladite comparaison entre les informations reçues, relatives aux paramètres d'émission-réception déterminés pour les premier et second terminaux présente un écart supérieur à un seuil.

**32.** Contrôleur de stations selon l'une quelconque des revendications 20 à 31, dans lequel lesdits moyens d'allocation commandent l'allocation au canal à établir ou à reconfigurer pour ledit premier terminal d'un code non orthogonal à au moins un code déjà alloué à un autre canal établi pour un second terminal, tel que ladite comparaison entre les informations relatives aux paramètres d'émission-réception déterminés pour les premier et second terminaux présente un écart maximal.

## FIG. 1

$C_{1,1} = (1)$

$C_{2,1} = (1,1)$

$C_{2,2} = (1,-1)$

$C_{4,1} = (1,1,1,1)$

$C_{4,2} = (1,1,-1,-1)$

$C_{4,3} = (1,-1,1,-1)$

$C_{4,4} = (1,-1,-1,1)$

$C_{8,1}$

$C_{8,2}$

$C_{8,3}$

$C_{8,4}$

$C_{8,5}$

$C_{8,6}$

$C_{8,7}$

$C_{8,8}$

**FIG. 2**

**FIG. 3**

(ART ANTÉRIEUR)

EP 1 398 986 A1

FIG. 4

EP 1 398 986 A1

**Office européen des brevets**

# RAPPORT DE RECHERCHE EUROPEENNE

Numéro de la demande

EP 03 29 2098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 926 912 A (CSELT CENTRO STUDI LAB TELECOM) 30 juin 1999 (1999-06-30) <br> * alinéa [0003] * <br> * alinéa [0004] * <br> * alinéa [0008] * <br> * alinéa [0016] * <br> * alinéa [0021] - alinéa [0024] * <br> --- | 1-32 | H04Q7/36 |
| A | EP 1 202 587 A (TOKYO SHIBAURA ELECTRIC CO) 2 mai 2002 (2002-05-02) <br> * alinéa [0005] * <br> ----- | 1-32 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| BERLIN | 5 novembre 2003 | Bernedo Azpiri, P |

**ANNEXE AU RAPPORT DE RECHERCHE EUROPEENNE
RELATIF A LA DEMANDE DE BREVET EUROPEEN NO.**

EP 03 29 2098

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-2003

| Document brevet cité au rapport de recherche | | Date de publication | Membre(s) de la famille de brevet(s) | | Date de publication |
|---|---|---|---|---|---|
| EP 0926912 | A | 30-06-1999 | IT | 1295808 B1 | 27-05-1999 |
| | | | CA | 2252389 C | 09-07-2002 |
| | | | EP | 0926912 A2 | 30-06-1999 |
| | | | JP | 3030700 B2 | 10-04-2000 |
| | | | JP | 11225369 A | 17-08-1999 |
| | | | US | 6337853 B1 | 08-01-2002 |
| EP 1202587 | A | 02-05-2002 | EP | 1202587 A2 | 02-05-2002 |
| | | | JP | 2002208889 A | 26-07-2002 |
| | | | US | 2002051430 A1 | 02-05-2002 |

EPO FORM P0460

Pour tout renseignement concernant cette annexe : voir Journal Officiel de l'Office européen des brevets, No.12/82